# EUROPÄISCHE PATENTANMELDUNG

(11) **EP 1 416 449 A2**
(43) Veröffentlichungstag der Anmeldung: **06.05.2004**
(21) Anmeldenummer: 03024802.5
(22) Anmeldetag: 30.10.2003
(51) Int. Cl.: G07F 7/10, G07F 19/00

(54) **Sicherheitsmodul und Verfahren zur Durchführung von vertraulichen elektronischen Transaktionen**

(30) Priorität: 30.10.2002 DE 20217813 U
(71) Anmelder: Kuhn, Thomas, 81241 München (DE)
(72) Erfinder: Kuhn, Thomas, 81241 München (DE)

(57) **Zusammenfassung**

Ein Sicherheitsmodul, bei dem es sich insbesondere um eine Chipkarte (1) handelt, umfasst ein erstes Verbindungsmittel (2) zur Datenkommunikation mit einer Datenverarbeitungseinrichtung (6, 7) sowie ein zweites Verbindungsmittel (3) zur Datenkommunikation mit einem Benutzerendgerät (4), wobei zwischen dem Benutzerendgerät (4) und dem Sicherheitsmodul (1) eine Vertrauensbeziehung besteht. Darüber hinaus beinhaltet das Sicherheitsmodul (1) eine Steuereinrichtung zur Steuerung der Datenkommunikation zwischen dem Benutzerendgerät (4) und der Datenverarbeitungseinrichtung (6, 7), wobei die Steuereinrichtung derart ausgestaltet ist, dass während der elektronischen Transaktionen Daten mit vertraulichen und/oder geschützten Inhalten von dem Benutzerendgerät (4) an das zweite Verbindungsmittel (3) und/oder von dem zweiten Verbindungsmittel (3) an das Benutzerendgerät (4) übertragen werden.

## Beschreibung

Die Erfindung betrifft ein Sicherheitsmodul, insbesondere eine Chipkarte, sowie ein Verfahren zur Durchführung von vertraulichen elektronischen Transaktionen.

Heutzutage werden in vielen Bereichen des täglichen Lebens, beispielsweise zum Telefonieren oder zur Durchführung von Geldtransaktionen, Chipkarten eingesetzt. Es sind hierbei eine Vielzahl von Chipkartentypen bekannt. Die einfachste dieser Karten ist die sog. Speicherchipkarte, welche ausschließlich Speicherchips in Form eines ROMs oder EPROMs enthält. Speicherchipkarten bieten sich an, wenn nur eine kleine Menge von Informationen benötigt wird und keine hohen Sicherheitsanforderungen gestellt werden.

Bei der Durchführung und als Grundlage von Hochsicherheitsanwendungen, beispielsweise im elektronischen Datenverkehr, werden vorzugsweise Sicherheitsmodule in der Form von Prozessorchipkarten eingesetzt, welche einen Mikroprozessor und eine Auswahl von verschiedenen flüchtigen und nichtflüchtigen Speicherbereichen aufweisen. Mit solchen Karten können hochvertrauliche Daten mit Hilfe des Mikroprozessors auf der Chipkarte beispielsweise chiffriert bzw. dechiffriert oder elektronisch unterschrieben bzw. verifiziert werden. Eine Weiterentwicklung dieser Karten sind die sog. Supersmartcards, die auf der Karte neben einem Prozessor auch eine Tastatur und Anzeige aufweisen, die über eine eingebaute elektrische Stromquelle gespeist werden. Der entscheidende Vorteil dieses Kartentyps ist die Sicherheit der mit der Karte durchgeführten Transaktionen, da Eingaben und Ausgaben nicht über externe Geräte, wie z.B. manipulierbare öffentliche Terminals, getätigt werden müssen.

Die Supersmartcards weisen zwar einen hohen Sicherheitsstandard auf, jedoch sind sie nicht sehr benutzerfreundlich, da alle sicherheitsrelevanten Daten über eine sehr kleine Tastatur auf der Karte eingegeben werden müssen und die Anzeige von vertraulichen Daten über ein kleines, schwer lesbares Display auf der Karte erfolgt. Ferner können solche Karten nicht an Terminals eingesetzt werden, bei denen die Chipkarte während der Durchführung der elektronischen Transaktionen in dem Terminal eingesteckt bleibt, da dann die Tastatur an der Chipkarte nicht mehr bedienbar ist. Darüber hinaus sind solche Karten aufgrund des integrierten Displays und der integrierten Tastatur teuer. Des weiteren gibt der Benutzer bei manchen Transaktionen oder Anwendungen die Supersmartcard aus seiner Hand, sodass eventuelle Manipulationen durchgeführt werden können.

Aufgabe der Erfindung ist es deshalb, ein Sicherheitsmodul sowie ein Verfahren zur Durchführung von vertraulichen elektronischen Transaktionen zu schaffen, welche eine sichere Übertragung von vertraulichen Daten mit hoher Benutzerfreundlichkeit gewährleisten.

Diese Aufgabe wird gemäß den Merkmalen der unabhängigen Patentansprüche gelöst. Weiterbildungen der Erfindung ergeben sich auch aus den abhängigen Ansprüchen.

Das erfindungsgemäße Sicherheitsmodul, bei dem es sich insbesondere um eine Chipkarte handelt, umfasst ein erstes Verbindungsmittel zur Datenkommunikation mit einer Datenverarbeitungseinrichtung sowie ein zweites Verbindungsmittel zur Datenkommunikation mit einem Benutzerendgerät, wobei zwischen dem Benutzerendgerät und dem Sicherheitsmodul eine Vertrauensbeziehung besteht. Darüber hinaus beinhaltet das Sicherheitsmodul eine Steuereinrichtung zur Steuerung der Datenkommunikation zwischen dem Benutzerendgerät und der Datenverarbeitungseinrichtung, wobei die Steuereinrichtung derart ausgestaltet ist, dass während der elektronischen Transaktionen Daten mit vertraulichen und/oder geschützten Inhalten von dem Benutzerendgerät an das zweite Verbindungsmittel und/oder von dem zweiten Verbindungsmittel an das Benutzerendgerät übertragen werden. Durch ein solches Sicherheitsmodul werden vertrauliche Daten zwischen Geräten übertragen, die üblicherweise im persönlichen Besitz des Benutzers sind und welche aufgrund ihrer Vertauensbeziehung eine sichere Datenübertagung gewährleisten. Durch die Verlagerung der Übertragung von vertraulichen Daten auf eine Kommunikationsstrecke zwischen dem Benutzerendgerät und dem Sicherheitsmodul wird ferner verhindert, dass vertrauliche Daten an durch Dritte manipulierbaren und somit nicht vertrauenswürdigen Geräten, wie z.B. öffentlichen Terminals, angezeigt bzw. durch den Benutzer eingegeben werden müssen. Das erfindungsgemäße Sicherheitsmodul stellt insbesondere eine Abwandlung der Supersmartcard dar, wobei vertrauliche Daten nunmehr nicht auf der Karte selbst eingegeben bzw. angezeigt werden, sondern hierzu ein Benutzerendgerät verwendet wird. Hierdurch wird die Benutzerfreundlichkeit erheblich verbessert, da die Anzeige und Eingabe von Daten an dem Benutzerendgerät wesentlich einfacher ist als auf einer Chipkarte. Des weiteren können passend für jede Situation beliebige unterschiedliche Benutzergeräte für Ein- und Ausgabe benutzt werden.

Bei dem auf dem Sicherheitsmodul vorgesehenen ersten Verbindungsmittel handelt es sich vorzugsweise um ein Kontaktmittel, welches eine drahtgebundene und/oder kontaktgebundene Kommunikation mit der Datenverarbeitungseinrichtung ermöglicht. Bei dem zweiten Verbindungsmittel handelt es sich vorzugsweise um eine Einheit, insbesondere eine Funkeinheit, zur drahtlosen Kommunikation mit dem Benutzerendgerät, wobei das Benutzerendgerät hierbei jedes beliebige mobile Gerät, insbesondere ein Mobilfunkgerät sein kann.

Die auf dem Sicherheitsmodul vorgesehene Steuereinrichtung ist vorzugsweise ein Mikroprozessor, der die Steuerung der Datenübertragung übernimmt. Ferner ist die Steuereinrichtung vorzugsweise derart eingerichtet, dass während der elektronischen Transaktionen die Datenkommunikation von dem zweiten Verbindungsmittel zu dem Benutzerendgerät und/oder umgekehrt über ein geeignetes Sicherheitsprotokoll abläuft. Bei diesem Sicherheitsprotokoll kann es sich beispielsweise um Bluetooth handeln. Hierbei wird eine besonders sichere Datenübertragung gewährleistet.

In einer weiteren Ausführungsform ist die Steuereinrichtung derart ausgestaltet, dass während der elektronischen Transaktionen ein Sicherheitsprotokoll zwischen dem Benutzerendgerät und dem zweiten Verbindungsmittel benutzt wird, wobei das Sicherheitsprotokoll zur Authentifikation der Vertrauensbeziehung zwischen dem Benutzerendgerät und dem Sicherheitsmodul dient. Auf diese Art und Weise wird eine Überprüfung der bestehenden Vertrauensbeziehung zwischen diesen beiden Geräten sichergestellt.

In einer weiteren Ausführungsform der Erfindung ist die Steuereinrichtung derart ausgestaltet, dass während der elektronischen Transaktionen ein Sicherheitsprotokoll zwischen dem Benutzerendgerät und dem zweiten Verbindungsmittel verwendet wird, wobei mit dem Sicherheitsprotokoll die Vertraulichkeit und/oder Integrität der zwischen dem Benutzerendgerät und dem Sicherheitsmodul übertragenen Daten sichergestellt wird. Unter Integrität der Daten versteht man hierbei die Gewährleistung, dass die Daten nicht manipuliert bzw. verändert wurden.

In einer weiteren Ausführungsform der Erfindung ist die Steuereinrichtung derart ausgebildet, dass immer dann, wenn zur Durchführung der elektronischen Transaktionen ein Terminal, beispielsweise integriert in das Lesegerät, verwendet wird, zuvor Daten zur Authentifikation des Terminals zwischen Sicherheitsmodul und Benutzerendgerät übertragen werden. Der Benutzer kann somit zunächst verifizieren, ob es sich bei dem Terminal, das üblicherweise von einer anderen Person als dem Benutzer des Terminals aufgestellt wurde und welches öffentlich zugänglich und deshalb manipulierbar ist, um ein authentisches Terminal handelt, an dem die gewünschten weiteren elektronischen Transaktionen bedenkenlos durchgeführt werden können.

In einer weiteren Ausgestaltung der Erfindung ist die Steuereinrichtung derart ausgestaltet, dass während der elektronischen Transaktionen als Daten mit vertraulichen und/oder geschützten Inhalten Informationen übertragen werden, die vom Benutzer an dem Benutzerendgerät eingebbar und/oder anzeigbar sind. Hierdurch kann beispielsweise beim Versenden von Dokumenten sichergestellt werden, dass auch tatsächlich das richtige Dokument versendet bzw. elektronisch unterschrieben wird, da der Inhalt des Dokuments an einem in der Regel vertrauenswürdigen Benutzerendgerät, und nicht an einem eventuell manipulierten Terminal, angezeigt wird. Ferner muss der Benutzer etwaige Geheimzahlen nicht mehr an einem öffentlichen Terminal eingeben, welches unter Umständen derart manipuliert ist, dass Eingaben separat gespeichert und später missbräuchlich verwendet werden.

Neben dem oben beschriebenen erfindungsgemäßen Sicherheitsmodul betrifft die Erfindung auch ein Verfahren zur Durchführung von vertraulichen elektronischen Transaktionen, bei dem Daten zwischen einem Benutzerendgerät und einer Datenverarbeitungseinrichtung übertragen werden. Bei diesem Verfahren werden Daten mit vertraulichen und/oder geschützten Inhalten zwischen dem Benutzerendgerät und einem Sicherheitsmodul, das mit dem Benutzerendgerät und der Datenverarbeitungseinrichtung in Datenkommunikation steht, übertragen. Hierbei besteht zwischen dem Benutzerendgerät und dem Sicherheitsmodul eine Vertrauensbeziehung. Es ergeben sich bei diesem Verfahren in gleicher Weise die Vorteile, die auch mit dem erfindungsgemäßen Sicherheitsmodul erreicht werden. Insbesondere wird die Übertragung von vertraulichen Informationen auf ein Sicherheitsmodul und ein Benutzerendgerät verlagert, die üblicherweise im persönlichen Besitz des Benutzers und somit vertrauenswürdig sind. Es wird folglich verhindert, dass sicherheitsrelevante Informationen an manipulierbaren Zwischengeräten eingegeben bzw. angezeigt werden.

Vorzugsweise werden die Daten mit vertraulichen und/oder geschützten Inhalten über ein Sicherheitsprotokoll übertragen. In einer bevorzugten Ausführungsform wird das Sicherheitsprotokoll zur Authentifikation der Vertrauensbeziehung zwischen dem Benutzerendgerät und dem Sicherheitsmodul benutzt.

In einer weiteren Ausführungsform wird während der elektronischen Transaktionen ein Sicherheitsprotokoll zwischen dem Benutzerendgerät und dem Sicherheitsmodul verwendet, wobei mit dem Sicherheitsprotokoll die Vertraulichkeit und/oder Integrität der zwischen dem Benutzerendgerät und dem Sicherheitsmodul übertragenen Daten sichergestellt wird. Unter Integrität der Daten versteht man hierbei die Gewährleistung, dass die Daten nicht manipuliert bzw. verändert wurden.

In einer weiteren Ausführungsform werden als Daten mit vertraulichen und/oder geschützten Inhalten Daten zur Authentifikation eines Terminals übertragen, wobei über das Terminal Daten zwischen dem Sicherheitsmodul und der Datenverarbeitungseinrichtung übermittelt werden.

In einer besonders bevorzugten Ausführungsform werden als Daten mit vertraulichen und/oder geschützten Inhalten Informationen übertragen, die vom Benutzer an dem Benutzerendgerät eingebbar und/oder an diesem anzeigbar sind.

Ausführungsbeispiele der Erfindung werden nachfolgend anhand der Zeichnung dargestellt und erläutert.

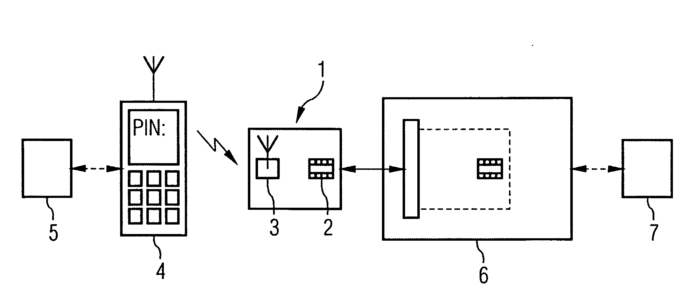

- Figur 1: zeigt eine Skizze, welche die Durchführung von elektronischen Transaktionen mit Hilfe des erfindungsgemäßen Sicherheitsmoduls verdeutlicht.

Bei dem in Figur 1 gezeigten Sicherheitsmodul handelt es sich um eine Kombichipkarte 1, welche Kontaktmittel 2, eine Funkeinheit 3 sowie einen in der Chipkarte integrierten und nicht dargestellten Mikroprozessor umfasst. Der Mikroprozessor steuert die Datenübertragungen über die Kontaktmittel 2 und über die Funkeinheit 3.

Zur Durchführung von elektronischen Transaktionen wird die Chipkarte 1 in ein Lesegerät 6 eingeführt, welches wiederum mit einem Zentralrechner 7 in Verbindung steht. Wenn die Chipkarte in das Lesegerät eingeschoben ist, wird über die Kontaktmittel 2 ein mechanischer Kontakt zum Auslesen von Daten mit dem Lesegerät hergestellt. Es können somit Daten zwischen dem Zentralrechner 7 und der Chipkarte ausgetauscht werden. Das Lesegerät 6 ist Teil eines öffentlichen Terminals, beispielsweise eines Geldautomaten, und der Zentralrechner 7 ist ein Server, der die vom Benutzer erwünschten Transaktionen, beispielsweise die Geldtransaktionen an einem Geldautomaten, steuert. Das Terminal kann jede Art eines öffentlich zugänglichen Terminals sein, über das vertrauliche Transaktionen abgewickelt werden. Beispielsweise könnten über das Terminal vertrauliche Dokumente versendet werden, die mittels der Chipkarte mit einer elektronischen Unterschrift versehen werden.

Die Funkeinheit 3 der Chipkarte 1 steht mit einem Benutzerendgerät 4, das ein Mobilfunkgerät ist, in Datenverbindung. Es handelt sich hierbei um eine kontaktlose Mobilfunkverbindung, die über ein Sicherheitsprotokoll, beispielsweise Bluetooth, abläuft. Ein Benutzer 5 kann über die Tastatur des Benutzerendgeräts 4 Eingaben machen oder vertrauliche Informationen am Display des Geräts ablesen. Zwischen der Kombichipkarte 1 und dem Benutzerendgerät 4 besteht eine Vertrauensbeziehung, die durch die Verwendung eines Sicherheitsprotokolls authentifiziert wird, bei dem die Chipkarte und das Benutzerendgerät durch ein gemeinsames Geheimnis, welches in einer Initialisierungsphase beiden Geräten bekannt gemacht wurde, geprägt sind. Das Benutzerendgerät 4 befindet sich im persönlichen Besitz des Benutzers und das Gerät ist nicht über das Terminal und den Zentralrechner manipulierbar.

Im folgenden werden zwei Szenarien geschildert, in denen das erfindungsgemäße Sicherheitsmodul eingesetzt werden kann. Das erste Szenario betrifft die Bezahlung einer Ware mittels EC-Karte unter Eingabe einer Geheimnummer. Hierbei ist es problematisch, dass die Geheimnummer üblicherweise über ein Terminal mit Lesegerät eingegeben wird, wobei das Terminal unter Umständen nicht vertrauenswürdig ist. Beispielsweise könnte sich auf dem Terminal ein sog. Aufsatz befinden, der unbefugt angebracht wurde und in dem die eingegebene Geheimnummer gespeichert wird. Anschließend könnte die auf diese Weise erhaltene Geheimnummer zur Durchführung von missbräuchlichen Transaktionen verwendet werden. Um dies zu vermeiden, wird die Geheimnummer vom Benutzer 5 nicht am Terminal eingegeben, sondern am Benutzerendgerät 4. Die eingegebene Geheimnummer wird dann mittels eines Sicherheitsprotokolls über die Funkeinheit 3 auf die Kombichipkarte 1 übertragen. Stimmt die Geheimnummer mit der auf der Chipkarte gespeicherten Geheimnummer überein, können Geldtransaktionen durch Datentransfer zwischen der Chipkarte und dem Zentralrechner über die Kontaktmittel 2 und das Lesegerät 6 durchgeführt werden. Es wird hierbei vermieden, dass der Benutzer vertrauliche Daten an einem externen Terminal eingibt, das unter Umständen manipuliert ist.

Ein zweites Szenario ist die Versendung von vertraulichen Dokumenten über ein öffentliches Terminal. Bei diesem Szenario besteht das Problem, dass das öffentliche Terminal unter Umständen unbefugt aufgestellt wurde und nicht zur Durchführung des vom Benutzer erwünschten Dokumententransfers autorisiert ist. Mit der erfindungsgemäßen Chipkarte hat der Benutzer nunmehr die Möglichkeit zu überprüfen, ob das aufgestellte Terminal von einem Zielgerät, welches im vorliegenden Fall der Zentralrechner 7 ist, autorisiert ist. Hierzu wird von dem Zentralrechner über das Terminal und die Chipkarte ein Code an das Benutzerendgerät übertragen und auf diesem angezeigt. Der Code ist vertraulich und wurde dem Benutzer vorher bekannt gegeben. Zur Erhöhung der Sicherheit kann sich der Code von Transaktion zu Transaktion verändern. Stimmt der angezeigte Code mit dem Code, der dem Benutzer bekannt gegeben wurde, überein, handelt es sich bei dem Terminal um ein autorisiertes Terminal, bei dem keine unbefugte Manipulation der übertragenen Daten stattfindet. Der Benutzer kann dann dieses Terminal bedenkenlos zum Verschicken seiner Dokumente verwenden, wobei die Kombichipkarte hierbei zum Anbringen von elektronischen Signaturen auf den Dokumenten dienen kann.

## Patentansprüche

1. Sicherheitsmodul, insbesondere Chipkarte, zur Durchführung von vertraulichen elektronischen Transaktionen, umfassend:
- ein erstes Verbindungsmittel (2) zur Datenkommunikation mit einer Datenverarbeitungseinrichtung (6, 7);
- ein zweites Verbindungsmittel (3) zur Datenkommunikation mit einem Benutzerendgerät (4), wobei zwischen dem Benutzerendgerät (4) und dem Sicherheitsmodul (1) eine Vertrauensbeziehung besteht;
- eine Steuereinrichtung zur Steuerung der Datenkommunikation zwischen dem Benutzerendgerät (4) und der Datenverarbeitungseinrichtung (6, 7), wobei die Steuereinrichtung derart ausgestaltet ist, dass während der elektronischen Transaktionen Daten mit vertraulichen und/oder geschützten Inhalten von dem Benutzerendgerät (4) an das zweite Verbindungsmittel (3) und/oder von dem zweiten Verbindungsmittel (3) an das Benutzerendgerät (4) übertragen werden.

2. Sicherheitsmodul nach Anspruch 1, bei dem das erste Verbindungsmittel (2) ein Kontaktmittel zur drahtgebundenen und/oder kontaktgebundenen Datenkommunikation mit der Datenverarbeitungsanlage (6, 7) umfasst.

3. Sicherheitsmodul nach Anspruch 1 oder 2, bei dem das zweite Verbindungsmittel (3) eine Einheit, insbesondere eine Funkeinheit, zur drahtlosen Datenkommunikation mit dem Benutzerendgerät (4) umfasst.

4. Sicherheitsmodul nach einem der vorhergehenden Ansprüche, bei dem die Steuereinrichtung einen Mikroprozessor umfasst.

5. Sicherheitsmodul nach einem der vorhergehenden Ansprüche, bei dem die Steuereinrichtung derart ausgestaltet ist, dass während der elektronischen Transaktionen die Datenkommunikation von dem zweiten Verbindungsmittel (3) zu dem Benutzerendgerät (4) und/oder umgekehrt über ein Sicherheitsprotokoll abläuft

6. Sicherheitsmodul nach einem der vorhergehenden Ansprüche, bei dem die Steuereinrichtung derart ausgestaltet ist, dass während der elektronischen Transaktionen ein Sicherheitsprotokoll zwischen dem Benutzerendgerät (4) und dem zweiten Verbindungsmittel (3) verwendet wird, wobei das Sicherheitsprotokoll zur Authentifikation der Vertrauensbeziehung zwischen dem Benutzerendgerät (4) und dem Sicherheitsmodul (1) dient.

7. Sicherheitsmodul nach einem der vorhergehenden Ansprüche, bei dem die Steuereinrichtung derart ausgestaltet ist, dass während der elektronischen Transaktionen ein Sicherheitsprotokoll zwischen dem Benutzerendgerät (4) und dem zweiten Verbindungsmittel (3) verwendet wird, wobei mit dem Sicherheitsprotokoll die Vertraulichkeit und/oder Integrität der zwischen dem Benutzerendgerät (4) und dem Sicherheitsmodul (1) übertragenen Daten sichergestellt wird.

8. Sicherheitsmodul nach einem der vorhergehenden Ansprüche, bei dem die Steuereinrichtung derart ausgestaltet ist, dass im Falle, dass zur Durchführung der elektronischen Transaktionen ein Terminal verwendet wird, als Daten mit vertraulichen und/oder geschützten Inhalten Daten zur Authentifikation des Terminals übertragen werden.

9. Sicherheitsmodul nach einem der vorhergehenden Ansprüche, bei dem die Steuereinrichtung derart ausgestaltet ist, dass während der elektronischen Transaktionen als Daten mit vertraulichen und/oder geschützten Inhalten Informationen übertragen werden, die an dem Benutzerendgerät (4) anzeigbar und/oder vom Benutzer (5) eingebbar sind.

10. Verfahren zur Durchführung von vertraulichen elektronischen Transaktionen, bei dem Daten zwischen einem Benutzerendgerät (4) und einer Datenverarbeitungseinrichtung (6, 7) übertragen werden, wobei:
- Daten mit vertraulichen und/oder geschützten Inhalten zwischen dem Benutzerendgerät (4) und einem Sicherheitsmodul (1), das mit dem Benutzerendgerät (4) und der Datenverarbeitungseinrichtung (6, 7) in Datenkommunikation steht, übertragen werden;
- wobei zwischen dem Benutzerendgerät (4) und dem Sicherheitsmodul (1) eine Vertrauensbeziehung besteht.

11. Verfahren nach Anspruch 10, bei dem die Daten mit vertraulichen und/oder geschützten Inhalten über ein Sicherheitsprotokoll übertragen werden.

12. Verfahren nach Anspruch 10 oder 11, bei dem zwischen dem Benutzerendgerät (4) und dem Sicherheitsmodul (1) ein Sicherheitsprotokoll verwendet wird, welches zur Authentifikation der Vertrauensbeziehung zwischen dem Benutzerendgerät (4) und dem Sicherheitsmodul (1) dient.

13. Verfahren nach einem der Ansprüche 10 bis 12, bei dem während der elektronischen Transaktionen ein Sicherheitsprotokoll zwischen dem Benutzerendgerät (4) und dem Sicherheitsmodul (1) verwendet wird, wobei mit dem Sicherheitsprotokoll die Vertraulichkeit und/oder Integrität der zwischen dem Benutzerendgerät (4) und dem Sicherheitsmodul (1) übertragenen Daten sichergestellt wird.

14. Verfahren nach einem der Ansprüche 10 bis 13, bei dem als Daten mit vertraulichen und/oder geschützten Inhalten Daten zur Authentifikation eines Terminals übertragen werden, wobei über das Terminal Daten zwischen dem Sicherheitsmodul (1) und der Datenverarbeitungseinrichtung (6, 7) übermittelt werden.

15. Verfahren nach einem der Ansprüche 10 bis 14, bei dem als Daten mit vertraulichen und/oder geschützten Inhalten Informationen übertragen werden, die an dem Benutzerendgerät (4) anzeigbar und/oder vom Benutzer (5) eingebbar sind.
